# EUROPEAN PATENT SPECIFICATION

(11) **EP 3 221 110 B1**
(45) Date of publication and mention of the grant of the patent: **30.09.2020**
(21) Application number: 15801947.1
(22) Date of filing: 17.11.2015
(51) Int. Cl.: B29C 43/58, B29C 33/70, B29C 51/46, B29C 45/76, B30B 15/16

(54) **MOULD FOR THE FORMING OF ARTICLES OR SEMI-FINISHED ARTICLES OR THE LIKE**
WERKZEUG ZUR FORMUNG VON ERZEUGNISSEN ODER HALBERZEUGNISSEN
OUTIL DE FORMAGE DES OBJETS OU DES OBJETS DEMI-FINI

(30) Priority: 19.11.2014 IT MO20140338
(43) Date of publication of application: 27.09.2017
(73) Proprietor: Antonini, Paolo, 21040 Venegono Inferiore (VA) (IT)
(72) Inventor: ANTONINI, Paolo, I-21040 Venegono Inferiore (VA) (IT); RABAIOLI, Maurizio, I-21100 Varese (IT)
(74) Representative: Brunacci, Marco
(86) International application number: PCT/IB2015/058888
(87) International publication number: WO 2016/079676

(56) References cited:
- EP-A2- 0 726 129
- DE-C1- 19 944 581
- US-A- 4 580 965
- US-A- 4 923 383
- US-A1- 2003 014 150
- US-A1- 2004 187 443
- US-B1- 6 419 861
- DATABASE WPI Week 199507 Thomson Scientific, London, GB; AN 1995-048313 XP002744718, -& JP H06 328458 A (TOYO KIKAI KINZOKU KK) 29 November 1994 (1994-11-29)

## Description

### Technical Field

The present invention relates to a mould for the forming of articles, semi-finished articles, or the like.

### Background Art

The use of the molding technique is known to transform raw materials of the metal or plastic type, or other type, in a finished product.

This technique consists in the plastic deformation and/or transformation of the raw material by means of a permanent form of the mould.

Specifically, there are two types of molding techniques: a first type, wherein the finished products are obtained by applying pressures to the raw material such as to induce intended plastic deformations, and a second type, wherein the finished product is carried out by forming of material (metal, plastic, etc.) dropped or injected in a liquid form in the permanent form.

Usually, a mould is made up of two dies which, coming in contact, enclose a space defining the final form which the finished product has to take on.

These dies are mounted on a press, so as to apply on the raw material the necessary pressure to obtain plastic deformations and transformations required to define the final piece.

In particular, the press has a fixed portion on which a die is mounted, and a movable portion, on which the other die is mounted.

The movable portion is able to move from an initial disengagement position, wherein it is spaced away from the fixed portion, to a final contact one wherein, precisely, it enters in contact with the fixed portion. The latter counteracts the movement of the movable portion so as to create, at the contact interface, the pressures to be applied on the material.

The dies are mounted on their respective portions exactly in the proximity of the surfaces of the press intended to enter to contact.

The raw material to be treated is interposed between the two dies so as to be crushed when the movable portion moves close towards the fixed portion. After deformation has taken place, the movable portion moves away from the fixed portion and the finished product remains within the first die.

The extraction of the finished piece usually occurs by means of an extraction unit positioned on the opposite side of the fixed portion with respect to the movable portion.

This unit consists of a fixed base, usually fastened to the ground and of a movable surface, commonly called "extraction table".

The movable surface is initially in contact with the fixed base and, after deformation has taken place, moves in the direction of the fixed portion as far as to push the finished piece so as to detach it from the first die.

The steps previously described are an example of a processing cycle of the finished pieces.

In the series production of finished pieces such steps are repeated so that at each cycle there will be a contact between the dies and a contact between the fixed base and the movable surface.

With the progress of the number of cycles, the dies tend to deform and wear with the consequent drop in quality of the finished product.

The latter, in fact, will feature undesired deformations that may affect the desired final result.

Moreover, the moulds, in order to avoid breakage and malfunction of machinery, have to work within some control parameters, such as the total number of cycles, the duration of a cycle, etc.

These parameters are supplied to the user directly by the manufacturer.

To guarantee the quality of the final product and the proper operation of the mould the need arises to monitor the above mentioned control parameters.

In modern molding presses, the control parameters are detected by specific sensors and computers that record the movements of the movable portions of the press. In particular, the operating system with which the press is actuated is able to detect and store the data referred to above.

A drawback depends on the fact that the above mentioned control parameters does not directly refer to the mould, but to the machine on which the mould is mounted. This means that the finished product quality is not assured.

The used mould, in fact, could be disassembled and reassembled on other presses without having an effective comparison between the finished piece and the mould used in terms of number and duration of the cycles, date of manufacturing of the mould, and other control parameters. The document EP0726129 discloses a mould for the forming of articles, comprising a first die and a second die associable in such a way as to define a final form of an article said second die being movable between a first disengagement position, wherein it is substantially spaced away from the first die, and a work position, wherein it is substantially in contact with said first die and at least one of said first die and said second die comprises at least a sensor device for detecting said work position of the second die.

### Description of the Invention

The main aim of the present invention is to provide a mould for the forming of articles, semi-finished articles, or the like which allows to control and monitor the control parameters mentioned above by referring directly to the mould itself. One object of the present invention is to enable a direct comparison between the finished article and the mould used to produce the article itself in terms of date, duration of the cycle, etc.

Another object of the present invention is to provide a mould which allows to overcome the mentioned drawbacks of the prior art within the ambit of a simple, rational, easy, effective to use and affordable solution.

The objects stated above are achieved by the present mould for the forming of articles, semi-finished articles, or the like having the characteristics of claim 1.

### Brief Description of the Drawings

Other characteristics and advantages of the present invention will become better evident from the description of a preferred, but not exclusive, embodiment of a mould for the forming of articles, semi-finished articles, or the like, illustrated by way of an indicative, but non-limiting, example in the accompanying drawings, in which:
Figures 1, 2, 3 are a simplified view of the mould according to the invention in three different work configurations;
Figure 4 is a view of a detail of the mould according to the invention.

### Embodiments of the Invention

With particular reference to such figures, reference number 1 globally indicates a mould for the forming of articles, semi-finished articles, or the like.

The mould 1 comprises a first die 2 associable with a second die 3 in such a way as to define a final form of an article, a semi-finished article or the like.

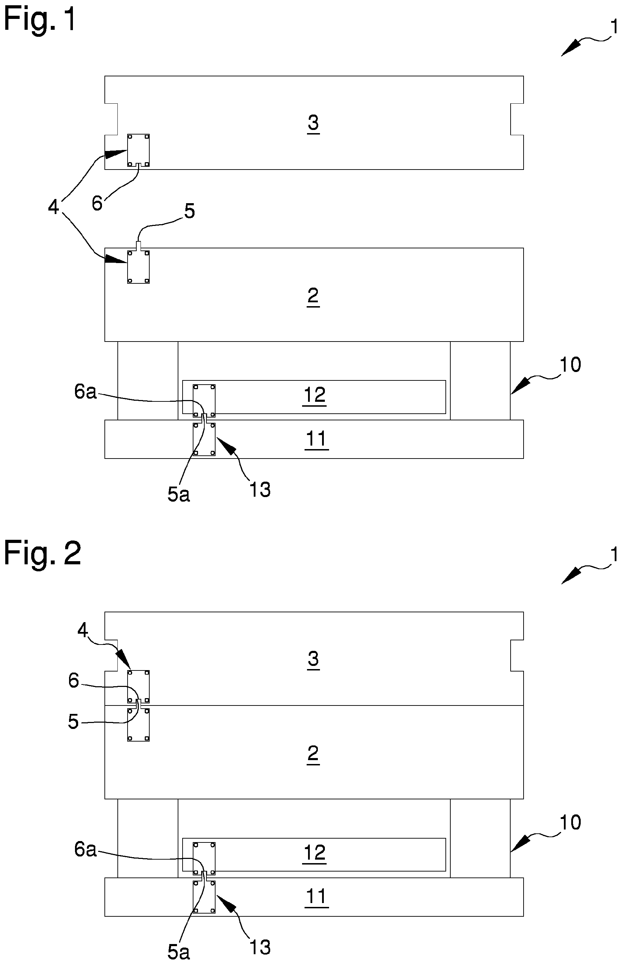

In particular, the second die 3 is movable between a first disengagement position, illustrated in figure 1 and a work position, illustrated in Figure 2.

In the disengagement position the second die 3 is spaced away from the first die 2, while in the work position the same is in contact with the first die 2.

More particularly, the two dies 2, 3 are designed to join in such a way as to enclose a space or a surface that defines the final form of the article or semi-finished article and the like.

In the figures represented in the attached tables the two dies 2, 3 are substantially plate-shaped elements.

More complex and articulated solutions are not ruled out, in which the two dies are constituted e.g. by half-shells defining uneven surfaces, or open elements the conjunction of which defines a space only partially closed, etc.

According to the invention, on at least one of the first die 2 and the second die 3 is arranged a sensor device 4 for detecting the work position of the second die 3. In particular, the sensor device 4 is able to detect the instant when the two dies 2, 3 come in contact during the work cycle.

In this regard, the sensor device 4 may be a contact sensor, a proximity sensor or a position sensor or an accelerometer.

The types of sensor listed above are able to detect the position of the first die 2 with respect to the second die 3 and, in particular, to detect the instant when the contact occurs and how much time elapses between one contact and another. Solutions cannot be ruled out in which other types of sensor are selected provided they are able to detect the same information as above.

In the embodiment illustrated in the figures, the sensor device 4 is of the type of a contact sensor and comprises a matching extremity 5 associated with the first die and an abutting extremity 6 associated with the second die 3.

The inverse solution is not ruled out, in which the matching extremity 5 is positioned at the second die 3 and the abutting extremity 6 is positioned at the first die 2.

The two extremities 5, 6 are in any case arranged so as to come in contact with each other when the two dies 2, 3 come to the work position.

From this contact an electrical signal is generated which can be processed as a piece of information on the contact occurred.

The mould 1 comprises at least a memory unit, not shown in the figures, operatively connected to the sensor device 4.

The information coming from the sensor are recorded and partly processed in the memory unit.

In particular, the type of processed information relates to the progressive number of contacts, the duration elapsed for each cycle, the duration the two dies 2, 3 are in contact and other information relating to the work cycle of the mould 1.

The mould 1 also comprises a location unit 7 and a data transmission unit 8.

The location unit 7 is able to detect geographical positioning data of the mould 1, so as to be able to track the movements thereof and to identify its position in a given period.

The location unit 7 is operatively connected to the memory unit in order to transmit the detected location data and then to record them.

The data transmission unit 8, on the other hand, is operatively connectable to an external peripheral unit, and is able to transmit the detected data to the peripheral unit itself.

In the present embodiment there are two data transmission units 8.

The first is of the type of a USB port and allows the connection with any compatible peripheral unit to this type of port. This way one can retrieve data with commonly used devices such as USB flash drives, external hard drives, etc.

The second is of the type of a connection port to a local network.

In this way, for example, it is possible to establish a connection of the sensor device 4 directly to a network of multiple devices or to a PC.

Alternative embodiments are not ruled out in which there is a plurality of data transmission units 8 which allow different types of connections to different types of peripheral units such as PCs, printers, portable devices, etc.

Advantageously the mould 1 comprises at least one communication unit 9 operatively connected to receiver means, such as mobile phones, radio receivers, satellite devices, etc.

In this way it is possible to receive real-time data on commonly used devices, so as to allow a continuous or periodic monitoring of the control parameters.

In the present embodiment, the location unit 7 and the communication unit 9 coincide, but solutions in which the two units are distinct from one another cannot be ruled out.

Advantageously, the above mentioned units 7, 8, 9 are placed on a single electronic board 14.

This is housed in a special airtight container positioned directly on the mould 1. Therefore, the set formed by the electronic board 14 and the respective container makes up a control device which can be installed on at least one of the first die 2 and the second die 3 of a mould 1.

Such a control device, therefore, is able to detect the work position by means of the sensor device 4, thus enabling the control and guarantee of the mould on which it is applied.

Solutions are not ruled out in which there is a plurality of electronic boards 14 dedicated to one or more units.

In the present embodiment, the mould 1 has a base structure 10 associated with the first die 2 and having at least one fixed base 11 and at least one movable element 12.

As shown in the figures, the fixed base 11 rests on the ground and the movable element 12 is able to move with respect to it.

Alternative solutions are not ruled out in which the base structure 10 is associated with the second die 3.

Solutions are not also ruled out in which the fixed base 11 is fastened to side or top walls of a special bearing structure, such as the frame of a machinery supporting the mould 1.

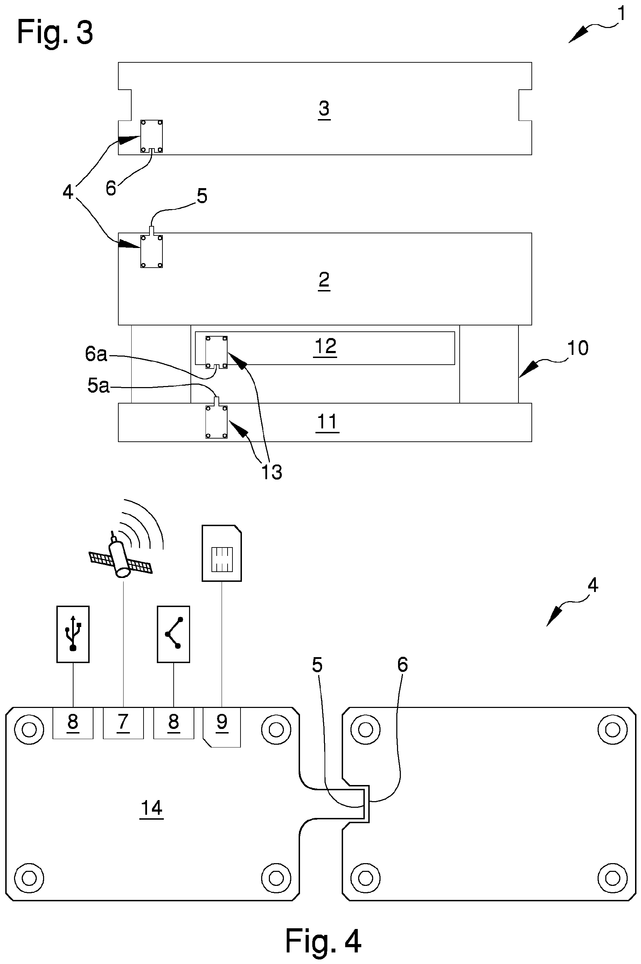

In the present embodiment, the movable element is substantially interposed between the fixed base 11 and the first die 2 and is able to move between a first limit position, shown in Figure 2, and a second limit position, shown in Figure 3.

In the first limit position the movable element 12 is in contact with the fixed base 11, while in the second limit position it is in contact with the second die 3. In particular, for each work cycle, the movable element 12 switches from the first limit position to the second limit position and vice versa.

The movable element 12 shown in the figures is of the type of an "extraction table" able to facilitate the extraction of the article or semi-finished article after the second die 3 has moved away from the first die 2.

Different movable elements 12 are not ruled out, such as e.g. tools for the machining of some details of the article, but still able to move between two limit positions similar to those described above.

Advantageously, the base structure 10 comprises an auxiliary sensor device 13 for detecting the second limit position of the movable element 12.

In this way it is possible to set an auxiliary control system that retrieves information on the work cycle in an indirect manner, namely by detecting data not directly on the mould 1, but closely related to the work cycle of the latter.

For example, to each work cycle of the mould corresponds a movement of the movable element 12 with respect to the fixed base 11, so it is possible to obtain information on the number of cycles and on working times by monitoring this movement.

In particular, the auxiliary sensor 13 comprises a matching extremity 5a associated with the fixed base 11 and an abutting extremity 6a associated with the movable element 12.

In the present embodiment, the auxiliary sensor 13 is similar to the sensor device 4 described above.

Also in this case there is one or more units 7, 8, 9 mentioned above, although different types cannot be ruled out, particularly suited to the different configuration of the movable element 12 with respect to the dies 2, 3.

The operation of the present invention is as follows.

The raw material to be used to make the article or semi-finished article is inserted in the mould 1 when this is in the disengagement position (figure 1).

The work cycle begins when the second die 3 moves towards the first die 2 as far as it comes to the work position.

When contact is made between the first die 2 and the second die 3, also the matching and abutting extremities 5, 6 automatically come in contact so as to generate the signal corresponding to the contact occurred.

After the article has been formed, the second die 3 moves away from the first one coming back to the disengagement position and concluding the work cycle. The two extremities of the sensor device 4 also detach automatically and send a signal corresponding to their disengagement.

Before a new work cycle begins, the movable element 12, initially in contact with the fixed base 11, detaches from the latter and moves to the second limit position to facilitate the extraction of the article from the first die 2.

Automatically and in a completely similar manner to what described above, the auxiliary sensor device 13 sends a signal generated by the contact/detachment of the extremities 5a, 6a.

The signals generated by the sensor devices 4, 13 are processed as information and stored in the memory unit.

The stored data can be downloaded and monitored through the data transmission units 8 and the communication unit 9.

In addition, each data can be associated with the geographical positioning data detected by the location unit 7.

It has in practice been found how the described invention achieves the proposed objects and in particular the fact is underlined that the mould allows for a direct control and monitoring of the control parameters by referring directly to the mould itself.

The data, in fact, are processed on the basis of a signal coming directly from the mould, and for this reason, there is a direct correspondence between the control parameters derived from it and the mould itself.

The present invention also allows a direct comparison between the finished article and the mould used to produce the article itself in terms of date, duration of the cycle, etc.

Given that the control parameters are directly attributable to the mould, it will automatically be possible to correlate to each article manufactured also the relative mould used with the related parameters.

The mould provided, finally, allows for greater protection in terms of guarantee for both the manufacturer and the user of the mould.

The manufacturer, in fact, can directly check whether the user has worked respecting the parameters indicated by him.

The user, on the other hand, in case of failure can demonstrate compliance with all the parameters and then will be in a stronger position to claim any compensation.

In any case it will be possible to track the movements of the mould, monitoring its position and, therefore, certifying its real provenance.

## Claims

1. Mould (1) for the forming of articles, semi-finished articles or the like, comprising a first die (2) and a second die (3) associable in such a way as to define a final form of an article, a semi-finished article or the like, said second die (3) being movable between a first disengagement position, wherein it is spaced away from the first die (2), and a work position, wherein it is in contact with said first die (2), in which at least one of said first die (2) and said second die (3) comprises at least a sensor device (4) for detecting said work position of the second die (3), **characterized in that** it comprises at least one of:
- at least a data transmission unit (8) operatively connectable to an external peripheral unit, and able to transmit the detected data to said peripheral unit;
- at least a communication unit (9) operatively connected to receiver means, and **in that** it comprises a base structure (10) associated with at least one of said first die (2) and said second die (3) and having at least a movable element (12) interposed between said base structure (10) and said first or second die (2, 3) and movable between a first limit position, wherein said movable element (12) is detached from said first or second die (2, 3) and a second limit position, wherein said movable element (12) is in contact with said first or second die (2, 3).

2. Mould (1) according to claim 1, **characterized by** the fact that said sensor device (4) comprises at least one of: a contact sensor, a proximity sensor, a position sensor, an accelerometer.

3. Mould (1) according to one or more of the preceding claims, **characterized by** the fact that said sensor device (4) comprises a matching extremity (5) integrally associated with at least one of said first die (2) and said second die (3) and an abutting extremity (6) integrally associated with the other of said first die (2) and said second die (3).

4. Mould (1) according to one or more of the preceding claims, **characterized by** the fact that it comprises at least a memory unit operatively connected to said sensor device (4).

5. Mould (1) according to one or more of the preceding claims, **characterized by** the fact that it comprises at least a location unit (7) able to detect the geographical positioning data of said mould (1).

6. Mould (1) according to one or more of the preceding claims, **characterized by** the fact that said data transmission unit (8) is of the type of a USB port.

7. Mould (1) according to one or more of the preceding claims, **characterized by** the fact that said data transmission unit (8) is of the type of a connection port to a local network.

8. Mould (1) according to one or more of the preceding claims, **characterized by** the fact that it comprises at least an electronic board (14) comprising said memory unit, said location unit (7), said data transmission unit (8) and said communication unit (9).

9. Mould (1) according to one or more of the preceding claims, **characterized by** the fact that it comprises a fixed base (11) and by the fact that said movable element (12) is in contact with said fixed base (11) in said first limit position.

10. Mould (1) according to one or more of the preceding claims, **characterized by** the fact that said base structure (10) comprises an auxiliary sensor device (4) for detecting said first limit position and/or said second limit position of the movable element (12).

11. Mould (1) according to one or more of the preceding claims, **characterized by** the fact that said auxiliary sensor (13) comprises a matching extremity (5a) associated with at least one of said movable element (12) and said fixed base (11) and an abutting extremity (6a) associated with the other of said movable element (12) and said fixed base (11).

12. Control device (14) installed onto at least one of a first die (2) and a second die (3) of a mould (1), according to one of the previous claims comprising at least a sensor device (4) for detecting a work position, wherein said second die (3) is substantially in contact with said first die (2), **characterized in that** it comprises at least one between:
- at least a data transmission unit (8) operatively connectable to an external peripheral unit, and able to transmit the detected data to said peripheral unit;
- at least a communication unit (9) operatively connected to receiver means.

## Patentansprüche

1. Form (1) zum Formen von Artikeln, Halbfertigartikeln oder dergleichen, umfassend eine erste Matrize (2) und eine zweite Matrize (3), die so zusammenfügbar sind, dass sie eine Endform eines Artikels, eines Halbfertigartikels oder dergleichen definieren, wobei die zweite Matrize (3) zwischen einer ersten Freigabeposition beweglich ist, in der sie von der ersten Matrize (2) beabstandet ist, und einer Arbeitsposition, in der sie mit der ersten Matrize (2) in Kontakt steht, in der mindestens eine der ersten Matrize (2) und der zweiten Matrize (3) mindestens eine Sensorvorrichtung (4) zum Erfassen der Arbeitsposition der zweiten Matrize (3) aufweist, **dadurch gekennzeichnet, dass** sie mindestens eine der folgenden Einrichtungen umfasst:
- mindestens eine Datenübertragungseinheit (8), die operativ mit einer externen peripheren Einheit verbindbar ist und in der Lage ist, die detektierten Daten an die periphere Einheit zu übertragen;
- mindestens eine Kommunikationseinheit (9), die operativ mit Empfängermitteln verbunden ist;
und dadurch, dass sie eine Basisstruktur (10) umfasst, die mit mindestens einer von der ersten Matrize (2) und der zweiten Matrize (3) verbunden ist und mindestens ein bewegliches Element (12) aufweist, das zwischen der Basisstruktur (10) und der ersten oder zweiten Matrize (2, 3) angeordnet ist, und zwischen einer ersten Grenzposition, in der das bewegliche Element (12) von der ersten oder zweiten Matrize (2, 3) gelöst ist, und einer zweiten Grenzposition, in der das bewegliche Element (12) in Kontakt mit der ersten oder zweiten Matrize (2, 3) steht, beweglich ist.

2. Form (1) nach Anspruch 1, **dadurch gekennzeichnet, dass** die Sensorvorrichtung (4) mindestens eines der folgenden Elemente umfasst: einen Kontaktsensor, einen Näherungssensor, einen Positionssensor, einen Beschleunigungsmesser.

3. Form (1) nach einem oder mehreren der vorhergehenden Ansprüche, **dadurch gekennzeichnet, dass** die Sensorvorrichtung (4) ein passendes Ende (5) umfasst, das integral mit mindestens einer von der ersten Matrize (2) und der zweiten Matrize (3) verbunden ist, und ein anstoßendes Ende (6), das integral mit der anderen von der ersten Matrize (2) und der zweiten Matrize (3) verbunden ist.

4. Form (1) nach einem oder mehreren der vorhergehenden Ansprüche, **dadurch gekennzeichnet, dass** sie mindestens eine Speichereinheit umfasst, die operativ mit der Sensorvorrichtung (4) verbunden ist.

5. Form (1) nach einem oder mehreren der vorhergehenden Ansprüche, **dadurch gekennzeichnet, dass** sie mindestens eine Ortungseinheit (7) umfasst, die in der Lage ist, die geographischen Positionierungsdaten der Form (1) zu erfassen.

6. Form (1) nach einem oder mehreren der vorhergehenden Ansprüche, **dadurch gekennzeichnet, dass** die Datenübertragungseinheit (8) vom Typ eines USB-Anschlusses ist.

7. Form (1) nach einem oder mehreren der vorhergehenden Ansprüche, **dadurch gekennzeichnet, dass** die Datenübertragungseinheit (8) von der Art eines Verbindungsanschlusses zu einem lokalen Netzwerk ist.

8. Form (1) nach einem oder mehreren der vorhergehenden Ansprüche, **dadurch gekennzeichnet, dass** sie mindestens eine elektronische Platine (14) umfasst, die die Speichereinheit, die Ortungseinheit (7), die Datenübertragungseinheit (8) und die Kommunikationseinheit (9) umfasst.

9. Form (1) nach einem oder mehreren der vorhergehenden Ansprüche, **dadurch gekennzeichnet, dass** sie eine befestigte Basis (11) umfasst und dadurch, dass das bewegliche Element (12) in der ersten Grenzposition mit der befestigten Basis (11) in Kontakt ist.

10. Form (1) nach einem oder mehreren der vorhergehenden Ansprüche, **dadurch gekennzeichnet, dass** die Basisstruktur (10) eine Hilfssensorvorrichtung (4) zum Erfassen der ersten Grenzposition und/oder der zweiten Grenzposition des beweglichen Elements (12) umfasst.

11. Form (1) nach einem oder mehreren der vorhergehenden Ansprüche, **dadurch gekennzeichnet, dass** der Hilfssensor (13) ein passendes Ende (5a) umfasst, das mit mindestens einem von dem beweglichen Element (12) und der befestigten Basis (11) verbunden ist, und ein anstoßendes Ende (6a), das mit dem anderen von dem beweglichen Element (12) und der festen Basis (11) verbunden ist.

12. Steuervorrichtung (14), die an mindestens einer von einer ersten Matrize (2) und einer zweiten Matrize (3) einer Form (1), gemäß einem der vorhergehenden Ansprüche, installiert ist, die mindestens eine Sensorvorrichtung (4) zum Erfassen einer Arbeitsposition umfasst, wobei die zweite Matrize (3) im Wesentlichen in Kontakt mit der ersten Matrize (2) steht, **dadurch gekennzeichnet, dass** sie mindestens eines umfasst zwischen:
- mindestens eine Datenübertragungseinheit (8), die operativ mit einer externen peripheren Einheit verbindbar ist und in der Lage ist, die detektierten Daten an die periphere Einheit zu übertragen;
- mindestens eine Kommunikationseinheit (9), die operativ mit Empfängermitteln verbunden ist.

## Revendications

1. Moule (1) pour la formation d'articles, d'articles semi-finis ou l'équivalent, comprenant une première matrice (2) et une seconde matrice (3) associables de façon à définir une forme finale d'un article, un article semi-fini ou l'équivalent, ladite seconde matrice (3) étant mobile entre une première position de découplage, dans laquelle elle est espacée de la première matrice (2), et une position de travail, dans laquelle elle est en contact avec ladite première matrice (2), dans laquelle au moins une parmi ladite première matrice (2) et ladite seconde matrice (3) comprend au moins un dispositif de capteur (4) pour détecter ladite position de travail de la seconde matrice (3), **caractérisé en ce qu'**il comprend au moins un parmi :
- au moins une unité de transmission de données (8) connectable de manière opérationnelle à une unité périphérique externe, et capable de transmettre les données détectées à ladite unité périphérique ;
- au moins une unité de communication (9) connectée de manière opérationnelle à des moyens de réception,
et **en ce qu'**il comprend une structure de base (10) associée à au moins une parmi ladite première matrice (2) et ladite seconde matrice (3) et présentant au moins un élément mobile (12) interposé entre ladite structure de base (10) et ladite première ou seconde matrice (2, 3) et mobile entre une première position limite, dans laquelle ledit élément mobile (12) est détaché de ladite première ou seconde matrice (2, 3) et une seconde position limite, dans laquelle ledit élément mobile (12) est en contact avec ladite première ou seconde matrice (2, 3).

2. Moule (1) selon la revendication 1, **caractérisé par le fait que** ledit dispositif de capteur (4) comprend au moins un parmi : un capteur de contact, un capteur de proximité, un capteur de position, un accéléromètre.

3. Moule (1) selon une ou plusieurs des revendications précédentes, **caractérisé par le fait que** ledit dispositif de capteur (4) comprend une extrémité correspondante (5) associée de manière solidaire à au moins une parmi ladite première matrice (2) et ladite seconde matrice (3) et une extrémité de butée (6) associée de manière solidaire à l'autre de ladite première matrice (2) et ladite seconde matrice (3).

4. Moule (1) selon une ou plusieurs des revendications précédentes, **caractérisé par le fait qu'**il comprend au moins une unité de mémoire connectée de manière opérationnelle audit dispositif de capteur (4).

5. Moule (1) selon une ou plusieurs des revendications précédentes, **caractérisé par le fait qu'**il comprend au moins une unité de localisation (7) capable de détecter les données de positionnement géographique dudit moule (1).

6. Moule (1) selon une ou plusieurs des revendications précédentes, **caractérisé par le fait que** ladite unité de transmission de données (8) est du type d'un port USB.

7. Moule (1) selon une ou plusieurs des revendications précédentes, **caractérisé par le fait que** ladite unité de transmission de données (8) est du type d'un port de connexion à un réseau local.

8. Moule (1) selon une ou plusieurs des revendications précédentes, **caractérisé par le fait qu'**il comprend au moins une carte électronique (14) comprenant ladite unité de mémoire, ladite unité de localisation (7), ladite unité de transmission de données (8) et ladite unité de communication (9).

9. Moule (1) selon une ou plusieurs des revendications précédentes, **caractérisé par le fait qu'**il comprend une base fixe (11) et en ce que ledit élément mobile (12) est en contact avec ladite base fixe (11) dans ladite première position limite.

10. Moule (1) selon une ou plusieurs des revendications précédentes, **caractérisé par le fait que** ladite structure de base (10) comprend un dispositif de capteur auxiliaire (4) pour détecter ladite première position limite et/ou ladite seconde position limite de l'élément mobile (12).

11. Moule (1) selon une ou plusieurs des revendications précédentes, **caractérisé par le fait que** ledit capteur auxiliaire (13) comprend une extrémité correspondante (5a) associée à au moins un parmi ledit élément mobile (12) et ladite base fixe (11) et une extrémité de butée (6a) associée à l'autre parmi ledit élément mobile (12) et ladite base fixe (11).

12. Dispositif de commande (14) installé sur au moins une parmi une première matrice (2) et une seconde matrice (3) d'un moule (1), selon une des revendications précédentes comprenant au moins un dispositif de capteur (4) pour détecter une position de travail, dans laquelle ladite seconde matrice (3) est sensiblement en contact avec ladite première matrice (2), **caractérisé en ce qu'**il comprend au moins un entre :
- au moins une unité de transmission de données (8) connectable de manière opérationnelle à une unité périphérique externe, et capable de transmettre les données détectées à ladite unité périphérique ;
- au moins une unité de communication (9) connectée de manière opérationnelle à des moyens de réception.
